# EUROPEAN PATENT APPLICATION

(11) **EP 4 708 435 A1**
(43) Date of publication of application: **11.03.2026**
(21) Application number: 25200246.4
(22) Date of filing: 04.09.2025
(51) Int. Cl.: H01M 10/0562, H01M 10/052, A62C 3/16

(54) **ALL-SOLID-STATE BATTERY**

(30) Priority: 05.09.2024 KR 20240120519
(71) Applicant: SAMSUNG SDI CO., LTD., Yongin-si, Gyeonggi-do 17084 (KR)
(72) Inventor: KIM, Giyoung, 17084 Yongin-si (KR)
(74) Representative: Marks & Clerk LLP

(57) **Abstract**

An all-solid-state battery including a battery body including a negative electrode layer, a positive electrode layer, and a solid electrolyte layer between the negative electrode layer and the positive electrode layer; a case accommodating the battery body; and a fire-extinguishing agent inside the case, wherein the fire-extinguishing agent is configured to produce a solid aerosol.

## Description

### BACKGROUND

### 1. Field

Embodiments relate to an all-solid-state battery.

### 2. Description of the Related Art

Recently, solid-state batteries that use solid electrolytes have been attracting attention. Solid-state batteries have solid electrolytes, which means that even with rising temperatures, the generation of flammable gases that occurs in liquid electrolytes may be reduced. However, even in all-solid-state batteries, when thermal runaway occurs, heat and oxygen may be generated as in liquid electrolytes, and although the generation of flammable gases may be reduced, the active materials in the positive and negative electrodes may still serve as fuel, meaning that the risk of battery fire may still exist.

### SUMMARY

Embodiments are directed to an all-solid-state battery including a battery body including a negative electrode layer, a positive electrode layer, and a solid electrolyte layer between the negative electrode layer and the positive electrode layer; a case accommodating the battery body; and a fire-extinguishing agent inside the case, wherein the fire-extinguishing agent is configured to produce a solid aerosol.

The fire-extinguishing agent may be included in a fire-extinguishing sheet in a shape of a film.

The fire-extinguishing sheet may be between the battery body and the case.

The film may include polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

The fire-extinguishing agent may be a capsule, and the capsule may include a core in which the fire-extinguishing agent may be condensed, and a shell surrounding the core.

The fire-extinguishing agent may be a solid.

The fire-extinguishing agent may include a potassium compound.

The fire-extinguishing agent may include potassium carbonate, potassium nitrate, potassium perchlorate, barium nitrate, plasticized nitrocellulose, plasticized nitroguanidine, dicyandiamide, dicyclohexyl dimethyl ammonium chloride (DCDA), dibutyl phthalate (DBP), stannous chloride (SnCl₂), polytetrafluoroethylene (PTFE), or strontium nitrate.

The solid aerosol may include potassium ions.

A weight of the fire-extinguishing agent per 1 m³ of a volume of the case may be at least 10.9 g and not more than 327 g.

Embodiments are directed to an all-solid-state battery including a battery body in which battery units, each including a negative electrode layer, a positive electrode layer, and a solid electrolyte layer between the negative electrode layer and the positive electrode layer, are electrically connected to each other; a case accommodating the battery body; and a fire-extinguishing agent between the battery body and the case, wherein the fire-extinguishing agent includes a potassium compound.

The fire-extinguishing agent may be a capsule, and the capsule may include a core in which the fire-extinguishing agent may be condensed, and a shell surrounding the core.

The fire-extinguishing agent may be a solid.

The fire-extinguishing agent may be included in a fire-extinguishing sheet in a film.

The fire-extinguishing sheet may be attached to an inner surface of the case or one surface of the battery body.

A thickness of the fire-extinguishing sheet may be at least 0.01 mm and not more than 1 mm.

The all-solid-state battery according to some embodiments may further include a cap plate on an upper portion of the case, wherein the fire-extinguishing agent may be on an inner surface of the case, on one surface of the battery body, or between the cap plate and the battery body.

The fire-extinguishing agent may include potassium carbonate, potassium nitrate, potassium perchlorate, barium nitrate, plasticized nitrocellulose, plasticized nitroguanidine, dicyandiamide, dicyclohexyl dimethyl ammonium chloride (DCDA), dibutyl phthalate (DBP), stannous chloride (SnCl₂), polytetrafluoroethylene (PTFE), or strontium nitrate.

The fire-extinguishing agent may be configured to produce a solid aerosol.

The solid aerosol may include potassium ions.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 is a perspective view schematically illustrating an example of an all-solid-state battery according to an embodiment of the present disclosure;
FIG. 2 is a cross-sectional view schematically illustrating an example of a cross section taken along line I-I' of FIG. 1;
FIG. 3 is a perspective view schematically illustrating an example of portion A of FIG. 2;
FIG. 4 is an exploded perspective view schematically illustrating a portion of an all-solid-state battery according to an embodiment of the present disclosure;
FIG. 5 is an exploded perspective view schematically illustrating a portion of an all-solid-state battery according to another embodiment of the present disclosure;
FIG. 6 is a cross-sectional view schematically illustrating an all-solid-state battery according to another embodiment of the present disclosure;
FIG. 7 is an exploded perspective view schematically illustrating an all-solid-state battery according to another embodiment of the present disclosure; and
FIG. 8 is an exploded perspective view schematically illustrating an all-solid-state battery according to another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

**In** the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. **In** addition, it will also be understood that when a layer is referred to as being "between" two layers, it can be the only layer between the two layers, or one or more intervening layers may also be present. Like reference numerals refer to like elements throughout.

Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In addition, it will be further understood that the terms "includes", "comprises" "including" and/or "comprising" used herein specify the presence of stated shapes, numbers, processes, members, components, and/or groups thereof, but do not preclude the presence or addition of one or more other shapes, numbers, operations, members, components, and/or groups thereof. In addition, in describing embodiments of the present disclosure, the use of "may" and "may be" may refer to "one or more embodiments of the present disclosure".

When it is described that two objects are 'identical', this means that these objects are 'substantially identical'. Accordingly, the substantially identical objects may include deviations considered low in the art, for example, deviations within 5%. In addition, when it is described that certain parameters are uniform in a region, this may mean that the parameters are uniform in terms of an average in the corresponding region.

Although the terms 'first', 'second', and the like are used to describe different elements, these elements are not limited by the terms. These terms are used to distinguish one element from another, and unless stated otherwise, a first element may be a second element.

Throughout the specification, unless stated otherwise, each element may be singular or plural.

When an element is referred to as being arranged "above (or under)" or "on (or below)" another element, the element may be arranged on an upper surface (or a lower surface) of the other element, and an intervening element may be arranged between the element and the other element on (or below) the element.

In addition, when an element is referred to as being "connected", "coupled", or "linked" to another element, it should be understood that the element may be directly connected or coupled to the other element, but an intervening element may be "interposed" between the elements, or the elements may be "connected", "coupled", or "linked" to each other through another element. In addition, when a part is referred to as being "electrically coupled" to another part, the part may be directly connected to the other part or may be connected to the other part through an intervening element therebetween.

Throughout the specification, "A and/or B" refers to A, B, or both A and B unless stated otherwise. That is, "and/or" includes all or any combination of the listed items. "C to D" includes a value of at least C and not more than D, unless stated otherwise. As used herein, the term "or" is not necessarily an exclusive term, e.g., "A or B" would include A, B, or A and B.

The terminology used herein is for the purpose of describing embodiments of the present disclosure, and is not intended to limit the present disclosure.

Hereinafter, embodiments will be described in detail with reference to the accompanying drawings, and the same or corresponding components will be denoted by the same reference numerals when described with reference to the accompanying drawings.

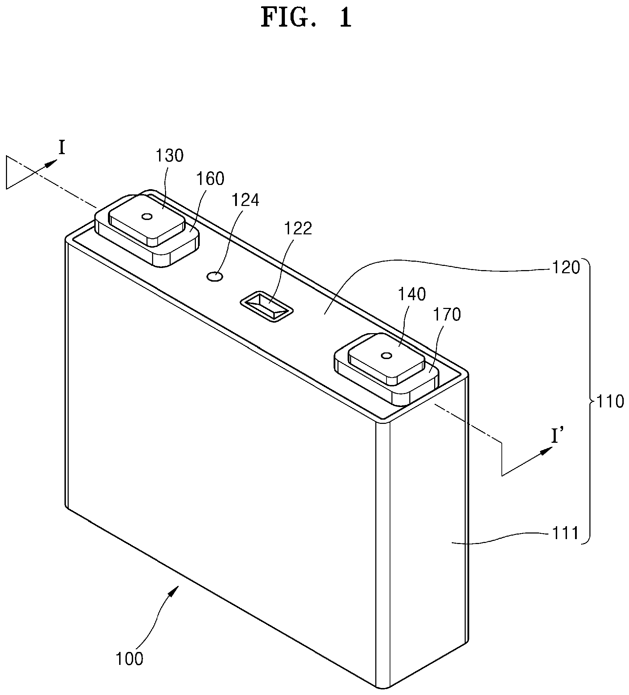

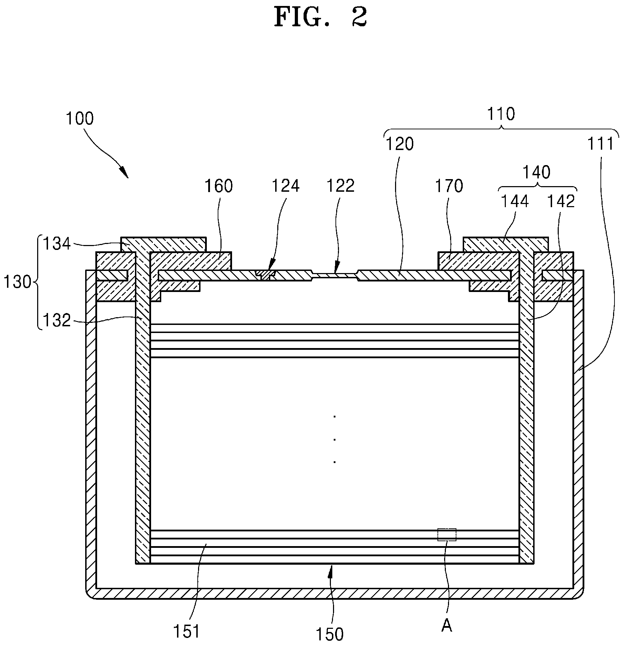

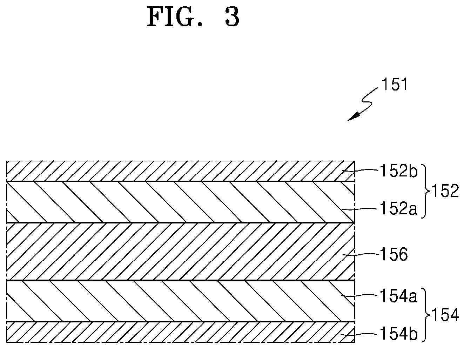

FIG. 1 is a perspective view schematically illustrating an example of an all-solid-state battery according to an embodiment of the present disclosure, FIG. 2 is a cross-sectional view schematically illustrating an example of a cross section taken along line I-I' of FIG. 1, and FIG. 3 is a perspective view schematically illustrating an example of portion A of FIG. 2.

Referring to FIGS. 1 to 3, an all-solid-state battery 100 may include, e.g., a battery body 150, a case 110 forming the exterior of the all-solid-state battery 100, and a positive terminal unit 130 and a negative terminal unit 140 both coupled to the case 110. In an implementation, the all-solid-state battery 100 includes a fire-extinguishing agent inside the case 110 to improve the stability of the all-solid-state battery 100. In an implementation, in the all-solid-state battery 100, the fire-extinguishing agent may be between the battery body 150 and the case 110.

The case 110 may include a can 111 that accommodates the battery body 150, and a cap plate 120 that seals and closes an upper portion of the can 111.

In an implementation, the all-solid-state battery 100 may include a first insulator 160 between the cap plate 120 and the positive terminal unit 130, and a second insulator 170 between the cap plate 120 and the negative terminal unit 140.

The battery body 150 may include a plurality of battery units 151 electrically connected to each other. Each of the battery units 151 may include, e.g., a positive electrode layer 152, a negative electrode layer 154, and a solid electrolyte layer 156 between the positive electrode layer 152 and the negative electrode layer 154.

In an implementation, the battery units 151 may be stacked in the height direction of the battery body 150 to form the battery body 150. In an implementation, the battery body 150 may include stacking type battery units 151 and have a substantially rectangular parallelepiped shape. In another implementation, the battery body 150 may include the positive electrode layer 152, the solid electrolyte layer 156, including a solid electrolyte, and the negative electrode layer 154, sequentially stacked and wound into a jelly-roll shape.

In an implementation, the battery units 151 may have a plate shape and may include the positive electrode layer 152, the solid electrolyte layer 156, and the negative electrode layer 154 sequentially stacked.

The positive electrode layer 152 may include, e.g., a positive electrode current collector layer 152b and a positive active material layer 152a that may be sequentially arranged toward the negative electrode layer 154.

The positive electrode current collector layer 152b may have a rectangular shape in a plan view, e.g., a sheet shape, a foil shape, or a plate shape. As materials constituting the positive electrode current collector layer 152b, suitable materials for use in solid-state batteries may be used, e.g., stainless steel, aluminium, copper, nickel, iron, titanium, carbon, or alloys thereof.

The positive active material layer 152a may reversibly absorb and release lithium ions. The positive active material layer 152a may include, e.g., a positive active material. In an implementation, the positive active material layer 152a may include, e.g., a solid electrolyte. In an implementation, suitable materials for use in positive active material layers of solid-state batteries, e.g., conductive additives, binders, fillers, or dispersants, may be included as needed.

The material of the positive active material may be any suitable material for use in solid-state batteries. In an implementation, the positive active material may include, e.g., lithium salts, e.g., lithium cobalt oxide, lithium nickel oxide, lithium nickel cobalt oxide, lithium nickel cobalt aluminium oxide, lithium nickel manganese oxide, lithium manganese oxide, or lithium iron phosphate, as well as nickel sulfide, copper sulfide, sulfur, iron oxide, vanadium oxide, or the like. The above positive active materials may be used alone or may be used in combination.

In an implementation, the positive active material may include a lithium salt of a transition metal oxide having a layered rock salt structure among the lithium salts. The term "layered" may refer to a thin sheet-like form. In addition, the term "rock salt structure" may refer to a sodium chloride-type structure, which may be a type of crystal structure, and specifically, a structure that face-centered cubic lattices formed by each of cations and anions are displaced by 1/2 of each unit grid ridge from each other.

Examples of lithium salts of transition metal oxides having the layered rock salt structure may be lithium salts of ternary transition metal oxides, e.g., LiNiₓCo_{y}Al_{z}O₂ (NCA) or LiNiₓCo_{y}Mn_{z}O₂ (NCM) (here, 0<x<1, 0<y<1, 0<z<1, and x+y+z=1). In a case in which the positive active material includes a lithium salt of a ternary transition metal oxide with the layered rock salt structure, the energy density and thermal stability of the all-solid-state battery 100 may be improved.

The positive active material may be coated with a coating layer. The coating layer may use any suitable material for use as a coating layer of a positive active material of the all-solid-state battery 100. In an implementation, the coating layer may be, e.g., Li₂O-ZrO₂ or the like.

In an implementation, the positive active material may include, e.g., a lithium salt of a ternary transition metal oxide such as NCA or NCM, and if nickel (Ni) is included as the positive active material, the capacity density of the all-solid-state battery 100 may be increased, and metal elution of the positive active material may be reduced. Accordingly, the all-solid-state battery 100 according to an embodiment may exhibit improved long-term reliability and cycle characteristics.

The positive active material may have a particle shape, e.g., a sphere or an oval. In an implementation, a particle diameter of the positive active material may be in a range suitable for a positive active material of a related-art solid-state battery. In an implementation, a content of the positive active material in the positive active material layer 152a may be in a range suitable for a positive electrode layer of a solid-state battery.

In an implementation, examples of conductive additives that may be blended into the positive active material layer 152a may be, e.g., graphite, carbon black, acetylene black, Ketjenblack, carbon fiber, metal powder, or the like. In an implementation, examples of binders that may be blended into the positive active material layer 152a may be, e.g., styrene-butadiene rubber, polytetrafluoroethylene, polyvinylidene fluoride, polyethylene, or the like. In an implementation, for a filler, a dispersant, an ion conductive additive, or the like that may be blended into the positive active material layer 152a, suitable materials used for an electrode in a solid-state secondary battery, may be used.

The solid electrolyte layer 156 is between the positive electrode layer 152 and the negative electrode layer 154 (specifically, between the positive active material layer 152a and a negative active material layer 154a). The solid electrolyte layer 156 may have a rectangular shape in a plan view, e.g., a sheet shape, a foil shape, or a plate shape, and may include a solid electrolyte capable of moving ions. The material of the solid electrolyte may be a suitable material that may be used in an all-solid-state battery, e.g., a sulfide solid electrolyte, an oxide solid electrolyte, a polymer electrolyte, or the like.

Examples of sulfide-based solid electrolyte materials to be included in the solid electrolyte may be, e.g., Li₂S-P₂S₅, Li₂S-P₂S₅-LiX (X may be, e.g., a halogen element (e.g., I or Cl)), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m may be an integer and Z may be, e.g., Ge, Zn, or Ga), Li₂S-GeS₂, Li₂S-SiS₂-Li₃PO₄, Li₂S-SiS₂-LiₚMO_{q} (p and q may be integers and M may be, e.g., P, Si, Ge, B, Al, Ga or In), or the like. The sulfide solid electrolyte material may be produced by treating a starting material (e.g., Li₂S or P₂S₅), e.g., with a melt quenching method, a mechanical milling method, or the like. In an implementation, a heat treatment may be performed after the above treatment. The solid electrolyte may be, e.g., amorphous, crystalline, or both.

In an implementation, the solid electrolyte may include a material containing, e.g., sulfur, silicon, phosphorus, or boron among the sulfide solid electrolyte materials. Including these materials may help ensure that the lithium conductivity of the solid electrolyte layer 156 may be improved, and that battery characteristics of the all-solid-state battery 100 may be improved. In an embodiment, the solid electrolyte may include, e.g., a material containing sulfur (S), phosphorus (P), and lithium (Li), and, e.g., a material containing Li₂S-P₂S₅.

If a material containing Li₂S-P₂S₅ is used as a sulfide solid electrolyte material forming the solid electrolyte, a mixing molar ratio of Li₂S and P₂S₅ may be, e.g., in a range of Li₂S:P₂S₅=50:50 to 90:10. In an implementation, the solid electrolyte layer 156 may further include a binder. Examples of the binder included in the solid electrolyte layer 156 may be, e.g., styrene-butadiene rubber, polytetrafluoroethylene, polyvinylidene fluoride, polyethylene oxide, or the like. The binder in the solid electrolyte layer 156 may be the same as or different from the binder in the positive active material layer 152a.

The negative electrode layer 154 may include, e.g., a negative electrode current collector layer 154b and the negative active material layer 154a sequentially arranged toward the positive electrode layer 152.

The negative electrode current collector layer 154b may have a rectangular shape in a plan view, e.g., a sheet shape, a foil shape, or a plate shape. A material included in the negative electrode current collector layer 154b may be a suitable material for use in an all-solid-state battery. Examples of the above material may be stainless steel, aluminium, copper, nickel, iron, titanium, carbon, or the like.

The negative active material layer 154a may contain one or more negative active materials forming an alloy or a compound together with lithium. If the all-solid-state battery 100 according to an embodiment is overcharged, the negative active material contained in the negative active material layer 154a and lithium ions that have moved from the positive electrode layer 152 may form an alloy or a compound, and thus, lithium metal may be precipitated on one or both sides of the negative active material layer 154a.

In an implementation, at an initial stage of charging, the negative active material of the negative active material layer 154a and the lithium ions may form an alloy or a compound, such that lithium may be absorbed in the negative active material layer 154a. After the absorption, if the capacity of the negative active material layer 154a is exceeded, lithium metal may be precipitated on one side or both sides of the negative active material layer 154a. A metal layer may be formed by the lithium metal. Because the lithium metal may be formed while diffusing through the negative active material capable of forming an alloy or a compound together with lithium ions, the lithium metal may be uniformly formed along a surface of the negative active material layer 154a instead of a dendritic phase. During discharge, the lithium metal of the negative active material layer 154a and the metal layer may be ionized and may move to the positive active material layer 152a. Accordingly, the lithium metal may be used as a negative active material, thereby improving energy density.

In an embodiment, a sum of the thicknesses of the negative electrode current collector layer 154b and the negative active material layer 154a, both included in each battery unit 151, may be less than the thickness of the lithium metal layer precipitated between the negative electrode current collector layer 154b and the negative active material layer 154a in a state in which the all-solid-state battery 100 is fully charged.

In an implementation, if the specific capacity per unit area of the positive electrode layer 152 is X (mAh / cm²), a thickness of the lithium metal layer precipitated in the negative electrode layer 154 in the stacking direction in a fully charged state may be 4.85*X (µm).

A negative active material for realizing this function may be, e.g., amorphous carbon, Au, Pt, Pd, Si, Al, Bi, Sn, In, or Zn. Examples of the amorphous carbon may be carbon black, e.g., acetylene black, furnace black, or Ketjenblack, graphene, or the like.

The shape of the negative active material be a suitable particle shape, and the negative active material may form a uniform layer, e.g., a plating layer. If the negative active material has a particle shape, lithium ions may pass through gaps between the fine granular negative active materials to form a lithium metal layer between the negative active material layer 154a and the negative electrode current collector layer 154b. In a case in which the plating layer may be formed, a metal layer may be precipitated between the negative active material layer 154a and the solid electrolyte layer 156.

The negative active material layer 154a may further include a binder. By including the binder, the negative active material layer 154a may be stabilized on the negative electrode current collector layer 154b. The binder may be, e.g., styrene-butadiene rubber, polytetrafluoroethylene, polyvinylidene fluoride, polyethylene, or a combination thereof.

In an implementation, in the negative active material, an additive used in a suitable solid-state secondary battery, e.g., a filler, a dispersant, or an ion conductive additive, may be appropriately mixed.

The case 110 may form the overall exterior of the all-solid-state battery 100, and may include, e.g., the can 111 that accommodates the battery body 150, and the cap plate 120 that seals and closes an upper portion of the can 111.

The can 111 may have an opening in an upper portion thereof to allow the battery body 150 to be accommodated therein. The can 111 may include a conductive material, e.g., aluminium and an alloy, or nickel-plated steel.

The case 110 may protect the battery body 150 from external impact and may function as a heat sink that releases heat accompanying charging and discharging operations of the battery body 150 to the outside.

The cap plate 120 may be, e.g., a thin plate of the same material as the can 111, and in a shape that covers the opening of the can 111. The cap plate 120 may be on one side of the can 111 after the battery body 150 is accommodated in the can 111, to seal the can 111 by joining it to the can 111 through welding or the like.

The cap plate 120 may include, e.g., a safety vent 122. The safety vent 122 may be configured to rupture and release gas if the pressure inside the case 110 is excessive. In addition, the safety vent 122 may be in the cap plate 120 and in a portion of the can 111. In an implementation, the safety vent 122 may be located the can 111 or the cap plate 120.

By arranging the fire-extinguishing agent between the battery body 150 and the case 110, the temperature of the all-solid-state battery 100 may be lowered in advance before thermal runaway of the all-solid-state battery 100, and thus, thermal runaway may be delayed or prevented. Accordingly, the stability of the all-solid-state battery 100 may be improved.

The cap plate 120 may include, e.g., an electrolyte inlet 124. After the cap plate 120 is joined with the can 111, an electrolyte may be injected into the case 110 through the electrolyte inlet 124, and after the injection of the electrolyte is completed, the electrolyte inlet 124 may be sealed.

In the cap plate 120, the positive terminal unit 130, which may be electrically connected to the positive electrode layer 152, and the negative terminal unit 140, which may be electrically connected to the negative electrode layer 154, may both penetrate the cap plate 120 and protrude outward.

In an implementation, the outer circumferential surfaces of upper pillars of the positive and negative terminal units 130 and 140 that protrude outward from the cap plate 120 may be threaded and fixed to the cap plate 120.

In an implementation, the positive and negative terminal units 130 and 140 may have a rivet structure to be riveted to the cap plate 120. In another implementation, the positive and negative terminal units 130 and 140 may be welded to the cap plate 120.

In an implementation, the first insulator 160 and the second insulator 170 may be between the cap plate 120 and the positive terminal unit 130 and between the cap plate 120 and the negative terminal unit 140, respectively.

The positive terminal unit 130 may include, e.g., a positive terminal plate 134, which may be an area where a positive electrode current collector plate 132 that may be integrally formed, e.g., formed simultaneously and of the same material to define a monolithic and seamless single structure, is joined to a flat busbar. The material of the positive terminal unit 130 may be the same as that of the positive electrode layer 152, e.g., aluminium.

The positive electrode current collector plate 132 may penetrate the first insulator 160 and be joined to the positive electrode current collector layer 152b by welding or the like. In an implementation, because both the positive electrode current collector plate 132 and the positive electrode current collector layer 152b may be aluminium, welding between the positive electrode current collector plate 132 and the positive electrode current collector layer 152b may be performed on homogeneous metals, resulting in excellent joining strength.

The first insulator 160 may insulate the positive terminal unit 130 and the cap plate 120 as well as the positive terminal unit 130 and the can 111.

The negative terminal unit 140 may include, e.g., a negative terminal plate 144, which may be an area where a negative electrode current collector plate 142 that is integrally formed is joined to a flat busbar.

The negative electrode current collector plate 142 may penetrate the second insulator 170 that insulates the negative terminal unit 140 and the cap plate 120 and the negative terminal unit 140 and the can 111, and be joined to the negative electrode current collector layer 154b by welding or the like. In an implementation, because both the negative electrode current collector plate 142 and the negative electrode current collector layer 154b may be copper, welding between the negative electrode current collector plate 142 and the negative electrode current collector layer 154b may be performed on homogeneous metals, resulting in excellent joining strength.

The second insulator 170 may insulate the negative terminal unit 140 and the cap plate 120, and the negative terminal unit 140 and the can 111.

In lithium-ion batteries, electrical energy within the battery may be rapidly converted into thermal energy, leading to an increase in temperature, and this heat generation may further accelerate the temperature increase, resulting in uncontrollable heating and explosion, known as thermal runaway. Thermal runaway may occur in stages where a protective layer of a negative electrode of the battery may be decomposed and destroyed due to temperature rise, an electrolyte may be thermally decomposed to generate flammable gases, a separator may melt and cause an internal short circuit, and a positive electrode may decompose to generate oxygen. That is, all three elements necessary for fire, i.e., heat, combustible gas as fuel, and oxygen, may be present.

If thermal runaway occurs in one battery cell, heat generation and explosion may cause the thermal runaway to spread to adjacent battery cells. Research has been conducted on battery-integrated fire-extinguishing systems and fire-extinguishing agents capable of immediately suppressing battery cell fires and mitigating and preventing spread of thermal runaway between battery cells.

Solid-state batteries may have solid electrolytes, which may result in a lower amount of flammable gas generation compared to liquid electrolytes, even if the temperature rises. However, when thermal runaway occurs in an all-solid-state battery, heat and oxygen may be generated as in liquid electrolytes, and even when the amount of flammable gas may be reduced, positive/negative active materials may serve as fuel, meaning that the fire elements may not be completely eliminated, and thus the risk of heat generation and explosion due to thermal runaway may still exists in the all-solid-state battery.

A fire-extinguishing agent is arranged inside an all-solid-state battery containing a solid electrolyte to reduce the risk of fire in the all-solid-state battery. Hereinafter, the type, position, and fire-extinguishing mechanism of a fire-extinguishing agent accommodated in an all-solid-state battery will be described in detail.

The fire-extinguishing agent may include potassium compounds. The fire-extinguishing agent may include, e.g., potassium carbonate, potassium nitrate, potassium perchlorate, barium nitrate, plasticized nitrocellulose, plasticized nitroguanidine, dicyandiamide, dicyclohexyl dimethyl ammonium chloride (DCDA), dibutyl phthalate (DBP), stannous chloride (SnCl₂), polytetrafluoroethylene (PTFE), and/or strontium nitrate.

The fire-extinguishing agent may produce a solid aerosol. In detail, the solid aerosol may contain potassium ions. That is, the fire-extinguishing agent may be activated by heat to release potassium ions in the form of a solid aerosol. Potassium ions may react with oxide ions, hydroxide ions, hydrogen ions, and the like to form stable compounds, such as potassium hydroxide or potassium carbonate. In an implementation, the fire-extinguishing agent may release potassium ions to remove oxygen, thereby improving a fire-extinguishing effect in the all-solid-state battery 100.

In an implementation, the fire-extinguishing agent may be produced into a solid form by hot-pressing various potassium compounds. In an implementation, the fire-extinguishing agent may be produced in a liquid form by mixing a powdered potassium compound with a binder.

A solid aerosol in a solid form may be attached to a position inside a battery where the flow of ions is not impeded, enabling a fire-extinguishing mechanism to operate. A solid aerosol in a liquid form may be applied as a coating to outermost portions of a positive electrode and a negative electrode. In an implementation, the all-solid-state battery 100 may include the fire-extinguishing agent between the case 110 and the battery body 150.

The arrangement and amount of the fire-extinguishing agent may be adjusted depending on the internal space of the case 110 excluding the battery body 150.

In order to achieve a light weight of the all-solid-state battery 100, a fire-extinguishing agent may have, e.g., a low mass inside the all-solid-state battery 100. In an implementation, the weight of the fire-extinguishing agent per 1 m³ of the volume of the case 110 may be, e.g., at least 10.9 g and not more than 327 g.

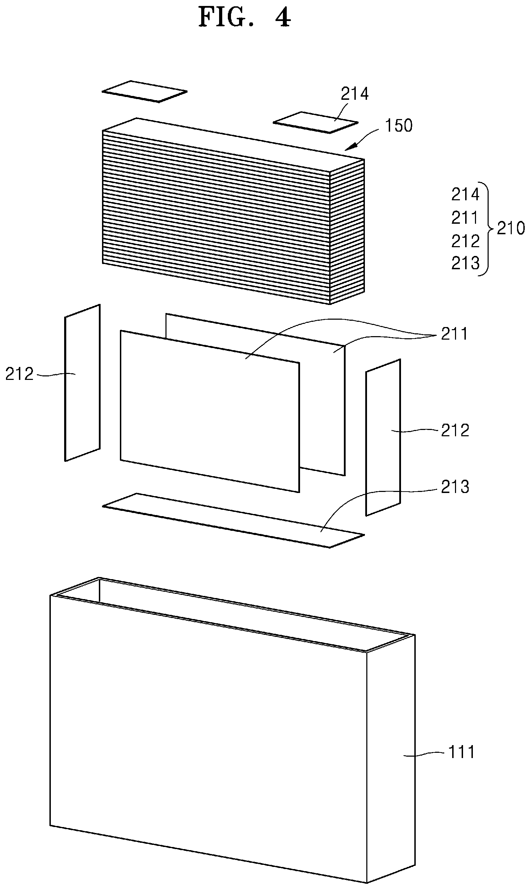

FIG. 4 is an exploded perspective view schematically illustrating a portion of an all-solid-state battery according to an embodiment of the present disclosure.

Referring to FIG. 4, a fire-extinguishing sheet 210 may be, e.g., a film, and may include, e.g., a fire-extinguishing agent. The fire-extinguishing sheet 210 may be, e.g., a film on which a fire-extinguishing agent may be applied or may be a film on which a fire-extinguishing agent may be uniformly dispersed.

The fire-extinguishing sheet 210 may be located between the case 110 and the battery body 150. The fire-extinguishing sheet 210 may be a film on an inner surface of the case 110. In an implementation, the fire-extinguishing sheet 210 may be on an inner surface of the can 111 or on a lower surface of the cap plate 120.

The fire-extinguishing sheet 210 may include, e.g., front sheets 211 on inner surfaces of the can 111 that may correspond to the wide main surfaces of the all-solid-state battery 100, side sheets 212 on inner surfaces of the can 111 that correspond to side surfaces, e.g., narrow surfaces, of the all-solid-state battery 100, and/or a bottom sheet 213 arranged on an inner surface of the can 111 that corresponds to the bottom surface of the all-solid-state battery 100.

The fire-extinguishing sheet 210 may include, e.g., upper sheets 214 on the bottom surface of the cap plate 120 between the cap plate 120 and the battery body 150, in addition to the front sheets 211, the side sheets 212, and the bottom sheet 213. The upper sheets 214 may be on the bottom surface of the cap plate 120 at portions that do not overlap with the safety vent 122. In an embodiment, in a case in which the safety vent 122 may be located in the center of the cap plate 120, the upper sheets 214 may be arranged on both sides of the safety vent 122. In an alternative embodiment, in a case in which the all-solid-state battery 100 may include an insulating plate between the cap plate 120 and the battery body 150, the fire-extinguishing sheet 210 may be on one surface of the insulating plate.

The fire-extinguishing sheet 210 may have various modifications, e.g., the fire-extinguishing sheet 210 may include only one of the front sheet 211, the side sheet 212, or the bottom sheet 213. In an implementation, the fire extinguishing sheet 210 may include, e.g., two front sheets 211 and side sheets 212. In an implementation, the fire-extinguishing sheet 210 may only include or further include, e.g., a sheet attached to the cap plate 120 or the insulation plate.

In the fire-extinguishing sheet 210, the fire-extinguishing agent may be hermetically packaged to prevent deterioration of the characteristics of the fire-extinguishing agent, i.e., the characteristics of the solid aerosol.

An example of the fire-extinguishing sheet 210 for hermetically packaging the fire-extinguishing agent may be in the form of a film, and the film may include, e.g., polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

In order to increase the volumetric efficiency of the all-solid-state battery 100, the fire-extinguishing sheet 210 may be formed as thin as possible to have a small volume. In an implementation, the thickness of the fire-extinguishing sheet 210 may be, e.g., at least 0.01 mm and not more than 1 mm.

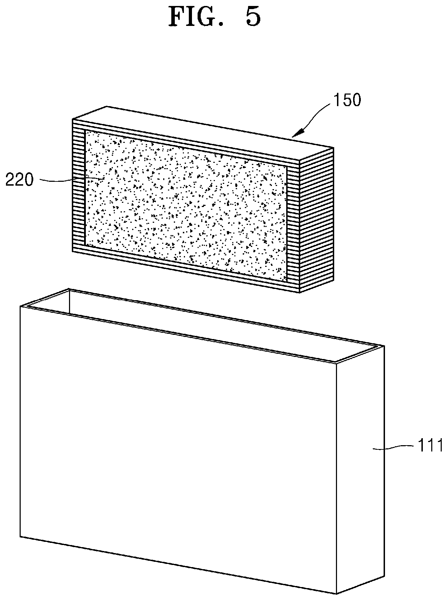

FIG. 5 is an exploded perspective view schematically illustrating a portion of an all-solid-state battery according to another embodiment of the present disclosure.

Referring to FIG. 5, in the all-solid-state battery 100, a film-shaped fire-extinguishing sheet 220 may be between the case 110 and the battery body 150, in an implementation, on one surface of the battery body 150. The fire-extinguishing sheet 220 may include, e.g., a fire-extinguishing agent. In an alternative embodiment, the battery body 150 may be covered with an insulating film to prevent short circuits with the case 110 and other components of the all-solid-state battery 100, and the fire-extinguishing sheet 220 may be attached onto the insulating film.

The fire-extinguishing sheet 220 may be, e.g., a film and may include a fire-extinguishing agent. The fire-extinguishing sheet 220 may be, e.g., a film on which a fire-extinguishing agent may be applied or may be a film on which a fire-extinguishing agent may be uniformly dispersed.

In the fire-extinguishing sheet 220, the fire-extinguishing agent may be hermetically packaged to prevent deterioration of the characteristics of the fire-extinguishing agent, i.e., the characteristics of the solid aerosol.

An example of the fire-extinguishing sheet 220 for hermetically packaging the fire-extinguishing agent may be in the form of a film, and the film may include, e.g., polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

In an implementation, the fire-extinguishing agent included in the fire-extinguishing sheet 220 may have the same or similar type, mass, volume, effect, function, etc. as those described above with reference to FIG. 4.

In order to increase the volumetric efficiency of the all-solid-state battery 100, the fire-extinguishing sheet 220 may be formed as thin as possible to have a small volume. In an implementation, the thickness of the fire-extinguishing sheet 220 may be, e.g., at least 0.01 mm and not more than 1 mm.

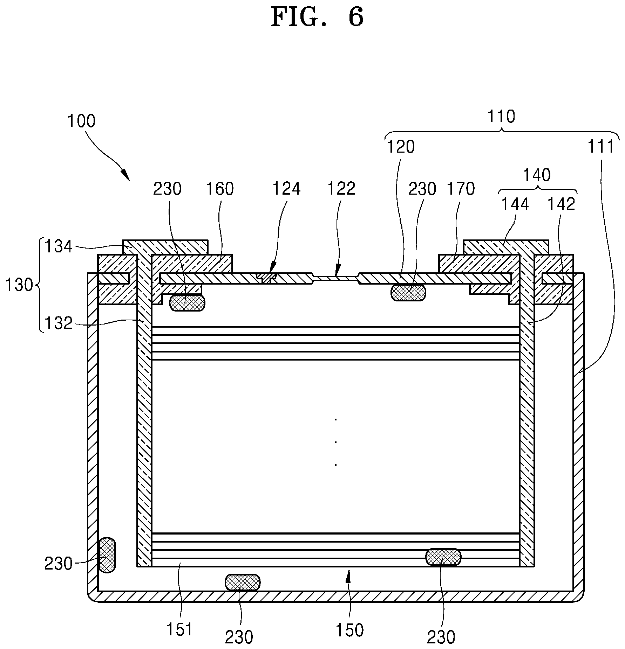

FIG. 6 is a cross-sectional view schematically illustrating an all-solid-state battery according to another embodiment of the present disclosure.

Referring to FIG. 6, the all-solid-state battery 100 may include, e.g., a solid fire-extinguishing agent 230 inside the case 110. The solid fire-extinguishing agent 230 may be between the battery body 150 and the case 110.

The solid fire-extinguishing agent 230 may be inside the case 110 of the all-solid-state battery 100. The solid fire-extinguishing agent 230 may be attached to an inner surface of a main surface, a side surface, or a bottom surface of the case 110, may be attached to at least one surface of the battery body 150, and may be attached between the cap plate 120 and the battery body 150, i.e., to the lower surface of the cap plate 120 or the lower surfaces of the insulators 160 and 170. In an implementation, in a case in which the all-solid-state battery 100 further includes an insulating plate between the cap plate 120 and the battery body 150, the solid fire-extinguishing agent 230 may be attached to an upper surface or a lower surface of the insulating plate.

A fire-extinguishing agent inside the solid fire-extinguishing agent 230 may have the same or similar type, mass, volume, effect, function, etc. as those described above with reference to FIG. 4.

In an implementation, the solid fire-extinguishing agent 230 may be formed by condensing the fire-extinguishing agent. That is, the solid fire-extinguishing agent 230 may be of a fire-extinguishing tablet type to be compressed and formulated in a solid form.

In an alternative embodiment, the table-type fire-extinguishing agent may be hermetically packaged and located inside the all-solid-state battery 100. When the tablet-type fire-extinguishing agent is hermetically packaged, the packaging film may include, e.g., polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

In an implementation, the solid fire-extinguishing agent 230 may be of a capsule type, and the capsule may include a core in which the fire-extinguishing agent may be condensed, and a shell surrounding the core. In an implementation, the solid fire-extinguishing agent 230 may include a fire-extinguishing agent and a shell surrounding the fire-extinguishing agent, and may have, e.g., a core-shell structure.

In the capsule-type solid fire-extinguishing agent 230, the shell surrounding the fire-extinguishing agent may include, e.g., a thermally fusible polymer. In an embodiment, the shell may be, e.g., a material that melts at a temperature of at least 80 °C and not more than 120 °C. In another embodiment, the shell may include, e.g., a low-density polyethylene (LDPE), polystyrene (PS), ethylene vinyl acetate (EVA), or acrylonitrile butadiene styrene (ABS).

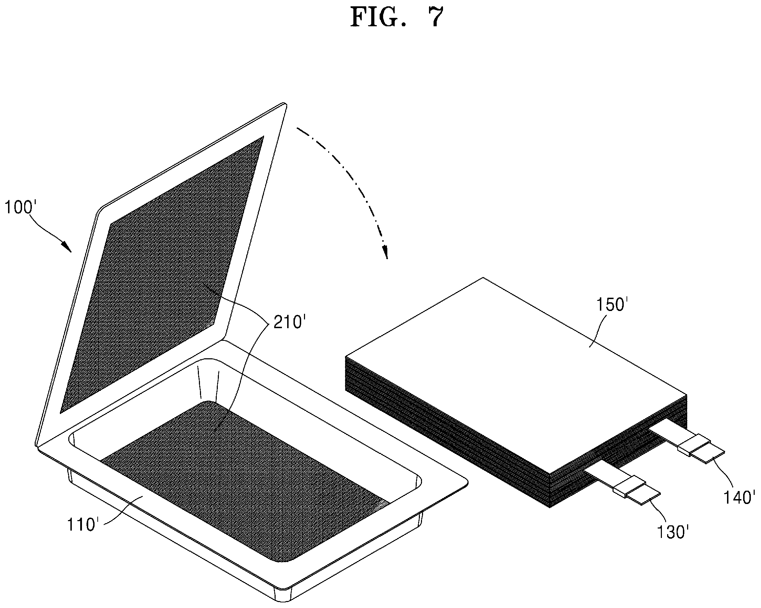

FIG. 7 is an exploded perspective view schematically illustrating an all-solid-state battery according to another embodiment of the present disclosure.

As illustrated in FIG. 7, an all-solid-state battery 100' may include a battery body 150', a case 110' that accommodates the battery body 150', and a fire-extinguishing sheet 210' attached to an inner surface of the case 110'.

The battery body 150' may include components identical or similar to those of the battery body 150 described above with reference to FIGS. 1 to 3.

The positive electrode current collector layer 152b and the negative electrode current collector layer 154b may be welded to a positive electrode lead 130' and a negative electrode lead 140' of an external terminal, to be electrically connected to the outside. A tab film for insulation from the case 110' may be attached to the positive electrode lead 130' and the negative electrode lead 140'.

The case 110' may be sealed by sealing portions of edges in contact with each other, while the battery body 150' may be accommodated therein. In an implementation, the sealing may be performed with the tab film arranged between the sealing portions.

The sealing portions of the case 110' may be made of a heat-melting material, and may have a structure in which sealing is performed by bonding heat-melting layers to each other. Because the heat-melting materials may have weak adhesion to metal, a tab film in the form of a thin film may be attached to a current collector to be fused with the case 110'.

The fire-extinguishing sheet 210' may be, e.g., a film, and may include a fire-extinguishing agent. The fire-extinguishing sheet 210' may be, e.g., a film on which a fire-extinguishing agent may be applied or may be a film on which a fire-extinguishing agent may be uniformly dispersed.

The fire-extinguishing agent included in the fire-extinguishing sheet 210' may have the same or similar type, mass, volume, effect, function, etc. as those described above with reference to FIG. 4.

The fire-extinguishing sheet 210' may be attached between the case 110' and the battery body 150', e.g., to at least one of the widest inner surfaces of the case 110', and, in an implementation, may be attached to at least one surface of the battery body 150'. In a case in which the battery body 150' may include an insulating film surrounding an outer surface thereof, the fire-extinguishing sheet 210' may be attached to one surface of the insulating film.

In the fire-extinguishing sheet 210', the fire-extinguishing agent may be hermetically packaged to prevent deterioration of the characteristics of the fire-extinguishing agent, i.e., the characteristics of the solid aerosol.

An example of the fire-extinguishing sheet 210' for hermetically packaging the fire-extinguishing agent may be, e.g., a film, and the film may include, e.g., polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

In order to increase the volumetric efficiency of the all-solid-state battery 100', the fire-extinguishing sheet 210' may be formed as thin as possible to have a small volume. In an implementation, the thickness of the fire-extinguishing sheet 210' may be, e.g., at least 0.01 mm and not more than 1 mm.

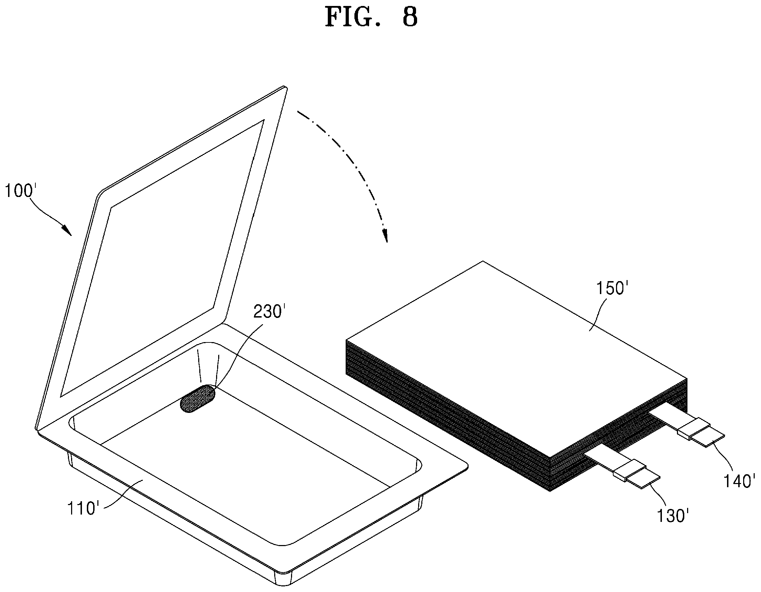

FIG. 8 is an exploded perspective view schematically illustrating an all-solid-state battery according to another embodiment of the present disclosure.

The all-solid-state battery 100' may include, e.g., the battery body 150', the case 110' that accommodates the battery body 150', and a solid fire-extinguishing agent 230' on an inner surface of the case 110'.

The all-solid-state battery 100' may have a configuration and effect identical or similar to the configuration and effect of the case 110' and battery body 150' described above with reference to FIG. 7. In an implementation, the battery body 150' may include components identical or similar to those of the battery body 150 described above with reference to FIGS. 1 to 3.

The solid fire-extinguishing agent 230' may be arranged inside the case 110', and specifically, may be arranged in a remaining space in the case 110' after accommodating the battery body 150'.

A fire-extinguishing agent of the solid fire-extinguishing agent 230' may have the same or similar type, mass, volume, effect, function, etc. as those of the fire-extinguishing agent described above with reference to FIG. 4.

In an implementation, the solid fire-extinguishing agent 230' may be formed by condensing the fire-extinguishing agent. That is, the solid fire-extinguishing agent 230' may be of a fire-extinguishing tablet type to be compressed and formulated in a solid form.

In an alternative embodiment, the table-type fire-extinguishing agent may be hermetically packaged and located inside the all-solid-state battery 100'. If the tablet-type fire-extinguishing agent is hermetically packaged, the packaging film may include, e.g., polyimide (PI), polyethylene terephthalate (PET), polypropylene (PP), polycarbonate (PC), polyvinyl chloride (PVC), polyethylene (PE), polyamide (Nylon), ethylene vinyl alcohol (EVOH), or polyurethane (PU).

In an implementation, the solid fire-extinguishing agent 230' may be, e.g., a capsule type, and the capsule may include a core in which the fire-extinguishing agent may be condensed, and a shell surrounding the core. In an implementation, the solid fire-extinguishing agent 230' may include a fire-extinguishing agent and a shell surrounding the fire-extinguishing agent, and may have, e.g., a core-shell structure.

In the capsule-type solid fire-extinguishing agent 230', the shell surrounding the fire-extinguishing agent may include, e.g., a thermally fusible polymer. In an embodiment, the shell may be formed of a material that melts at a temperature of at least 80 °C and not more than 120 °C. In another embodiment, the shell may include, e.g., low-density polyethylene (LDPE), polystyrene (PS), ethylene vinyl acetate (EVA), or acrylonitrile butadiene styrene (ABS).

Even in solid-state batteries with solid electrolytes instead of liquid electrolytes, there may be a risk of fire, and if thermal runaway occurs in one solid-state battery, leading to heat generation and explosion, thermal runaway may spread to adjacent solid-state batteries.

As a fire-extinguishing agent may be included in the all-solid-state battery 100 includes, specifically, as a fire-extinguishing agent in a film or core-shell structure may be accommodated in the all-solid-state battery 100, a fire in the all-solid-state battery 100 may be suppressed more quickly and effectively, and spread of thermal runaway to other solid-state batteries may be prevented.

In an implementation, the fire-extinguishing agent included in the all-solid-state battery 100 may include a potassium compound, the potassium compound may produce a solid aerosol containing potassium ions by heat, and the potassium ions may remove oxygen to improve the fire-extinguishing effect of the all-solid-state battery 100.

By way of summation and review, the present disclosure may provide an all-solid-state battery with improved stability.

According to embodiments of the present disclosure, a fire-extinguishing agent is included in an all-solid-state battery, such that thermal runaway of the all-solid-state battery may be delayed or prevented.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An all-solid-state battery comprising:
a battery body including a negative electrode layer, a positive electrode layer, and a solid electrolyte layer between the negative electrode layer and the positive electrode layer;
a case accommodating the battery body; and
a fire-extinguishing agent inside the case,
wherein the fire-extinguishing agent is configured to produce a solid aerosol.

2. The all-solid-state battery as claimed in claim 1, wherein the fire-extinguishing agent is included in a fire-extinguishing sheet in a shape of a film.

3. The all-solid-state battery as claimed in claim 2, wherein the fire-extinguishing sheet is between the battery body and the case.

4. The all-solid-state battery as claimed in claim 1, wherein:
the fire-extinguishing agent is a capsule, and
the capsule includes a core in which the fire-extinguishing agent is condensed, and a shell surrounding the core.

5. The all-solid-state battery as claimed in any one of claims 1 to 4, wherein the fire-extinguishing agent includes a potassium compound.

6. The all-solid-state battery as claimed in any one of claims 1 to 4, wherein the fire-extinguishing agent includes potassium carbonate, potassium nitrate, potassium perchlorate, barium nitrate, plasticized nitrocellulose, plasticized nitroguanidine, dicyandiamide, dicyclohexyl dimethyl ammonium chloride, dibutyl phthalate, stannous chloride, polytetrafluoroethylene, or strontium nitrate.

7. The all-solid-state battery as claimed in any one of claims 1 to 5, wherein the solid aerosol includes potassium ions.

8. The all-solid-state battery as claimed in any one of claims 1 to 7, wherein a weight of the fire-extinguishing agent per 1 m³ of a volume of the case is at least 10.9 g and not more than 327 g.

9. An all-solid-state battery comprising:
a battery body in which battery units, each including a negative electrode layer, a positive electrode layer, and a solid electrolyte layer between the negative electrode layer and the positive electrode layer, are electrically connected to each other;
a case accommodating the battery body; and
a fire-extinguishing agent between the battery body and the case,
wherein the fire-extinguishing agent includes a potassium compound.

10. The all-solid-state battery as claimed in claim 9, wherein:
the fire-extinguishing agent is a capsule, and
the capsule includes a core in which the fire-extinguishing agent is condensed, and a shell surrounding the core.

11. The all-solid-state battery as claimed in claim 9, wherein the fire-extinguishing agent is included in a fire-extinguishing sheet in a film.

12. The all-solid-state battery as claimed in claim 11, wherein the fire-extinguishing sheet is attached to an inner surface of the case or one surface of the battery body.

13. The all-solid-state battery as claimed in any one of claims 9 to 12, further including a cap plate on an upper portion of the case,
wherein the fire-extinguishing agent is on an inner surface of the case, on one surface of the battery body, or between the cap plate and the battery body.

14. The all-solid-state battery as claimed in any one of claims 9 to 13, wherein the fire-extinguishing agent is configured to produce a solid aerosol.

15. The all-solid-state battery as claimed in claim 14, wherein the solid aerosol includes potassium ions.
